# NEUE EUROPÄISCHE PATENTSCHRIFT

(11) **EP 2 646 188 B2**
(45) Veröffentlichungstag und Bekanntmachung des Hinweises auf die Entscheidung über den Einspruch: **06.11.2019**
(45) Hinweis auf die Patenterteilung: 10.02.2016
(21) Anmeldenummer: 11849896.3
(22) Anmeldetag: 01.12.2011
(51) Int. Cl.: B23B 31/26

(54) **WERKZEUGAGGREGAT MIT EXZENTERSPANNVORRICHTUNG**
TOOL ASSEMBLY WITH ECCENTRIC CLAMPING DEVICE
ENSEMBLE OUTIL POURVU D'UN DISPOSITIF DE SERRAGE EXCENTRIQUE

(30) Priorität: 01.12.2010 DE 102010052884
(43) Veröffentlichungstag der Anmeldung: 09.10.2013
(73) Patentinhaber: Benz GmbH, Werkzeugsysteme, 77716 Haslach (DE)
(72) Erfinder: ARMBRUSTER, Frank, 77723 Gengenbach (DE)
(74) Vertreter: Hoffmann Eitle
(86) Internationale Anmeldenummer: PCT/IB2011/003358
(87) Internationale Veröffentlichungsnummer: WO 2012/104671

(56) Entgegenhaltungen:
- DE-A1- 3 926 480
- DE-A1- 10 241 860
- DE-A1- 19 753 663
- DE-A1-102007 043 777
- DE-U1- 29 604 036

## Beschreibung

Die Erfindung betrifft ein Werkzeugaggregat nach dem Oberbegriff der Ansprüche 1 und 10.

Ein Werkzeugaggregat ist aus der DE 10 2007 043 777 A1 bekannt.

Aus der DE 102 41 860 A1 ist ein Exzenterspanner zum Spannen von Hohlschaft-Kegelwerkzeugen bekannt. Der Exzenterspanner ist quer in einer rotierenden Spindel angeordnet, um mittels eines Spannbolzens das von der Spindel aufzunehmende Werkzeug in eine entsprechende Werkzeugausnehmung einziehen zu können. Zur Vergrößerung der Exzenterspannkraft wirkt der Exzenter des Exzenterspanners über einen Kniehebel auf den Spannbolzen.

Der vorliegenden Erfindung liegt das Problem zugrunde, ein Werkzeugaggregat zu entwickeln, das eine Spindel mit einer über eine Exzenterklemmung betätigbaren Werkzeugaufnahme hat, wobei sich die Vorrichtung zur Werkzeugklemmung durch eine einfache und sichere Handhabung bei einer hohen Wiederholgenauigkeit bezüglich der Werkzeugpositionierung auszeichnet.

Das Problem wird mit den Merkmalen der Ansprüche 1 und 10 gelöst.

Es wird ein Werkzeugaggregat geschaffen, bei dem unter anderem eine in einem Gehäuse gelagerte Spindel an ihrem vorderen Ende eine Werkzeugaufnahme aufweist, in der das verwendete Werkzeug mittels einer Exzenterspannvorrichtung, z.B. in Kombination mit einer Segmentspannzange, wiederholgenau aufgenommen und festgeklemmt werden kann. Die Exzenterspannvorrichtung hat eine in der Spindel gelagerte Exzenterwelle, die zum Betätigen der Segmentspannzange durch das Gehäuse hindurch angesteuert wird. Dazu ist in der Wandung des Gehäuses eine spezielle Betätigungsbaugruppe angeordnet. Die Betätigungsbaugruppe weist ein Betätigungselement auf, das z.B. manuell mittels eines Schraubendrehers oder maschinell mittels eines entsprechenden Handhabungsgerätes bedient wird.

Das vorliegende Ausführungsbeispiel beschreibt ein Werkzeugaggregat mit nur einer Spindel. Selbstverständlich gelten die folgenden Ausführungen auch für Winkelaggregate oder andere mehrwellige Ausführungsformen.

Weitere Einzelheiten der Erfindung ergeben sich aus den Unteransprüchen und den nachfolgenden Beschreibungen von schematisch dargestellten Ausführungsformen.
- Figur 1:: Perspektivische Ansicht eines Werkzeugaggregats;
- Figur 2:: wie Figur 1; jedoch um 90° um die Längsachse geschwenkt;
- Figur 3:: Längsschnitt zu Figur 1;
- Figur 4:: Querschnitt zu Figur 1;
- Figur 5:: Teillängsschnitt zu Figur 2;
- Figur 6:: Segmentspannzange mit Exzenterwelle in der Position, wie sie im Werkzeugaggregat nach Figur 2 eingebaut ist;
- Figur 7:: Exzenterwelle nach Figur 6, jedoch um 90 Winkelgrade um die vertikale Achse geschwenkt;
- Figur 8:: Schnitt der in der Exzenterausnehmung angeordneten Exzenterwelle bei geöffneter Segmentspannzange
- Figur 9:: wie Figur 8, jedoch ist die Exzenterwelle um ca. 29° im Gegenuhrzeigersinn verschwenkt;
- Figur 10:: wie Figur 9, jedoch ist die Exzenterwelle um ca. 45° im Gegenuhrzeigersinn verschwenkt;
- Figur 11:: wie Figur 10, jedoch ist die Exzenterwelle um ca. 104° im Gegenuhrzeigersinn verschwenkt;
- Figur 12:: Explosionsdarstellung der Betätigungsbaugruppe.

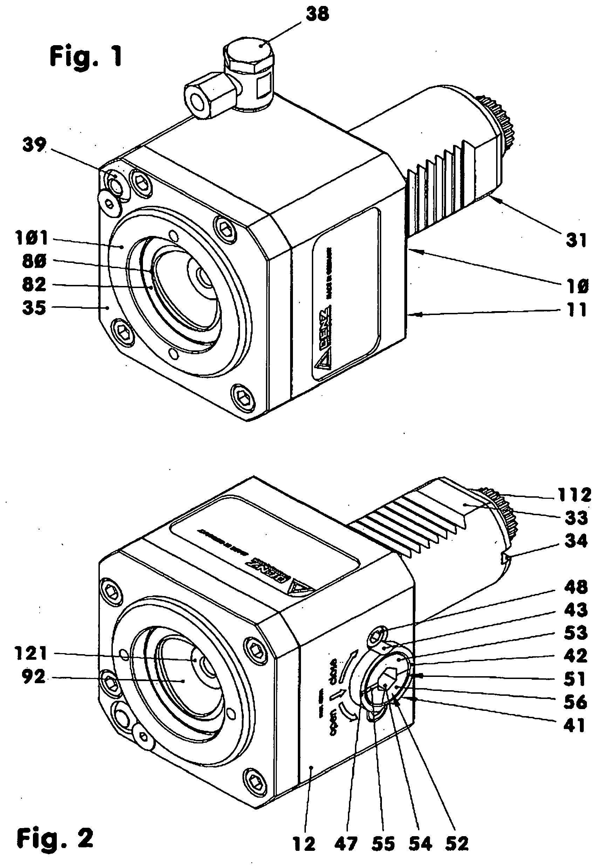

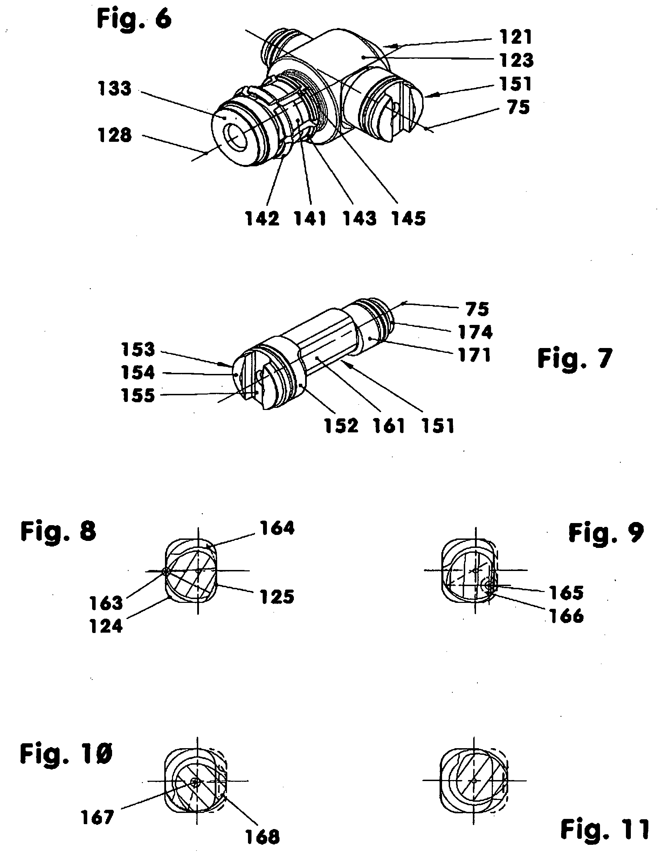

Die Figuren 1 und 2 zeigen ein Werkzeugaggregat, z.B. einen Bohr- und Fräskopf, in zwei Ansichten. Im Gehäuse (10) des Werkzeugaggregats ist eine Spindel (80) gelagert, die eine sogenannte "Capto"-Schnittstelle (91) aufweist. Zum Spannen eines Werkzeugs in dieser Schnittstelle (91) ist in der Spindel (80) eine Segmentspannzange (120) angeordnet, vgl. Figuren 6 und 7, die mit einer Exzenterspannvorrichtung (150) in einer Wirkverbindung steht. Die Exzenterwelle (151) dieser Exzenterspannvorrichtung (150) kann mittels eines Betätigungselements (51) einer im Gehäuse (10) gelagerten Betätigungsbaugruppe (40) betätigt werden.

Das z.B. einteilige Gehäuse (10) besteht aus einem im Wesentlichen quaderförmigen Gehäusevorderteil (11) und einer im Wesentlichen zylindrischen hinteren Gehäuseaufnahme (31). Das Gehäuse (10) weist eine durchgehende Stufenbohrung (14) auf. Ihre Mittellinie (15) ist deckungsgleich zur Mittellinie der hinteren Gehäuseaufnahme (31). Im vorderen Abschnitt (16) der Stufenbohrung (14) sind zwei in O-Anordnung positionierte Schulterkugellager (17) angeordnet, die zwischen einem Gehäusebund (18) und einem Gehäusedeckel (35) axial fixiert gelagert sind. Der Gehäusedeckel (35) ist am Außenring des vorderen, überstehenden Schulterkugellagers (17) zentriert. Die Stufenbohrung (14) verengt sich im Bereich der hinteren Gehäuseaufnahme (31). Dort befindet sich ein nach innen ragender Gehäusesteg (19), an dem ein im mittleren Bereich der Gehäuseaufnahme (31) angeordnetes Nadellager (21) mit seinem Außenring anliegt. Im hinteren Bereich weist die Gehäuseaufnahme (31) eine Innenringnut (22) auf, die als Freiraum für die Rastnase (182) einer Positionierkupplung (180) dient.

Das Gehäusevorderteil (11) hat auf seiner Bedienungsseite (12) eine gestufte Querbohrung (23), die in die zentrale Stufenbohrung (14) mündet, vgl. Figuren 2, 3 und 4. Sie nimmt die Betätigungsbaugruppe (40) auf. Ihre Mittellinie (24) schneidet z.B. die Mittellinie (15). Beidseits der Querbohrung (23) befinden sich in gleichem Abstand zwei Gewindebohrungen (25) mit zylindrischen Senkungen. Die Mittellinien der Gewindebohrungen (25) liegen mit der Mittellinie (24) der Querbohrung (23) in einer zur Mittellinie (15) normalen Ebene.

Im Gehäusevorderteil (11) sind z.B. zwei Kühl- und/oder Schmiermittelwege angeordnet. Der eine Weg führt das Kühl- und/oder Schmiermittel z.B. über einen externen Winkelanschluss (38) durch eine Gehäuselängsbohrung (27) zu einem Schwenkkugeladapter (39), der in der Regel ein externes Kühlmittelrohr lagert. Der zweite Weg weist gehäuseseitig in der rückwärtigen Stirnseite (13) des Gehäusevorderteils (11) eine Bohrung auf, die über eine Querbohrung zwischen den vorderen Schulterkugellagern (17) und dem hinteren Nadellager (21) ins Gehäuseinnere (26) mündet. Die weitere Kühl- und/oder Schmiermittelführung, die z.B. eine Werkzeuginnenkühlung möglich macht, erfolgt in der Spindel (80).

Die hintere Gehäuseaufnahme (31) weist eine Abflachung (33) auf, die bereichsweise über eine gerade Kerbverzahnung eines VDI-Zylinderschafts nach DIN 69880 verfügt. Die Aufnahme, die als Schnittstelle zur Werkzeugmaschine bzw. zu deren Schlitten oder Revolver dient, kann u.a. durch ein Prisma nach DIN 69881, durch einen HSK-Schaft nach DIN 69893 oder dergleichen ersetzt werden.

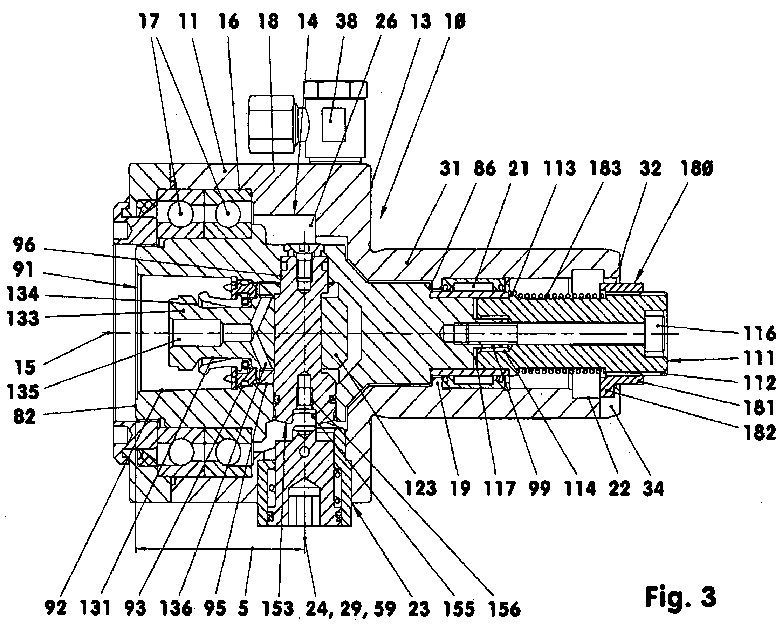

Die rückseitige Stirnseite (32) der Gehäuseaufnahme (31) weist z.B. eine radial orientierte Rechtecknut (34) auf, die die VDI-Zylinderschaftaußenseite mit der Stufenbohrung (14) verbindet, vgl. Figuren 2 und 3.

In der Stufenbohrung (14) ist in den Wälzlagern (17, 21) die z.B. zweiteilige Spindel (80) gelagert. Sie setzt sich aus einem vorderen Aufnahmeteil (81) und einer Kupplungswelle (111) zusammen. Zur Aufnahme der Innenringe der Schulterkugellager (17) hat das Aufnahmeteil (81) im vorderen Bereich einen Lagerabschnitt (83), der in seinem hinteren Bereich in einem Wellenbund (85) und im vorderen Bereich in einem Außengewinde (84) endet. Auf dem Außengewinde (84) ist eine Wellenmutter (101) aufgeschraubt, die die Innenringe der Schulterkugellager (17) axial gegen den Wellenbund (85) spannt. Die Wellenmutter (101) weist eine zylindrische, feinbearbeitete, radiale Außenfläche auf, auf der ein zwischen dem Gehäusedeckel (35) und der Wellenmutter (101) angeordneter Lippendichtring (36) mit seiner Dichtlippe anliegt. Der vordere Bereich der Wellenmutter (101) hat zur Ausbildung einer zusätzlichen Labyrinthdichtung (37) einen Umgriff (102), der einen vom Gehäusedeckel (35) nach vorn abstehenden Dichtsteg an zwei Radialflächen und einer Axialfläche mit geringem Spiel umgreift.

Das Nagellager (21) sitzt mit seinem Innenring im Bereich der zwischen dem Aufnahmeteil (81) und der Kupplungswelle (111) gelegenen Montagefuge (117). Zur Ausbildung einer drehmomentübertragenden Montagefuge (117) weist das Aufnahmeteil (81) an seiner rückwärtigen Stirnfläche einen Lappen (99) auf, der in eine entsprechende Nut (114) der vorderen Stirnseite der Kupplungswelle (111) hineinragt. Der Innenring des Nadellagers (21), der die Kupplungswelle (111) am Aufnahmeteil (81) zentriert, ist zwischen einem Bund (86) des Aufnahmeteils (81) und einem Bundsteg (113) der Kupplungswelle (111) mit Hilfe einer Zylinderkopfschraube (116) spielfrei eingespannt. Die Kupplungswelle (111) hat an ihrem hinteren Ende eine Kerbverzahnung (112). Über diese Kerbverzahnung wird u.a. das Drehmoment der Antriebsrotation der Werkzeugmaschine auf die Spindel (80) des Werkzeugaggregats übertragen.

Das Aufnahmeteil (81) hat eine zentrale, an die plane, feinbearbeitete Stirnfläche (82) anschließende - als Werkzeugaufnahme dienende - Werkzeugausnehmung (91), die aus einer Schnittstellenausnehmung (92), einem Stützringsitz (93) und einer Exzenterraumbohrung (95) besteht. Die Durchmesser der drei aufeinanderfolgenden Bereiche (92, 93, 95) der Werkzeugausnehmung (91) nehmen mit zunehmendem Abstand von der Stirnfläche (82) ab, so dass die Exzenterraumbohrung (95) den kleinsten Durchmesser von z.B. 24 mm aufweist.

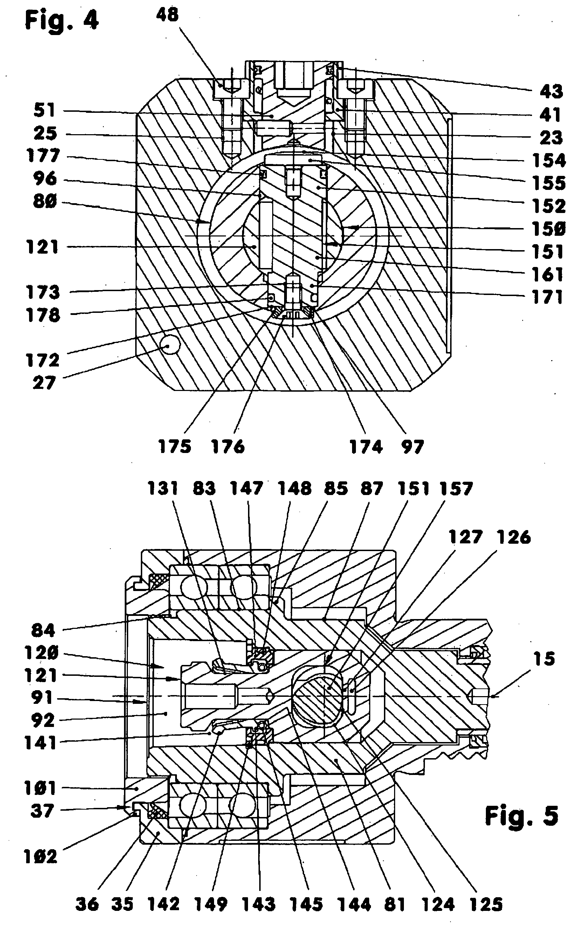

Die Schnittstellenausnehmung (92) ist z.B. ein polygonaler Hohlkegel, wie er im Normentwurf ISO/DIS 26623-2 für mehrere Abmessungstypen beschrieben ist. Zumindest für einen Teil dieser Schnittstellen-Abmessungstypen hat sich zwischenzeitlich eine Benennung durchgesetzt, die sich aus einem "C" und der ersten Ziffer des nutzbaren Stirnflächendurchmessers "d₁" zusammensetzt. Das in den Figuren dargestellte Werkzeugaggregat zeigt zumindest in den Figuren 3 und 5 in Originalgröße den Schnittstellen-Abmessungstyp "C4", wobei "d₁" hier 40 mm misst.

Die Exzenterraumbohrung (95), in der der Spannbolzen (121), der das entsprechende Werkzeug in der haltende Segmentspannzange (120) spannt, zentriert gelagert ist, weist eine durchgehende, mehrfach abgestufte Querbohrung (96) auf. Diese Querbohrung (96) ist z.B. quer zur Mittellinie (15) orientiert. Beispielsweise schneidet ihre Mittellinie (75) die Mittellinie (15). Der Teil der Querbohrung (96), der einen kleineren Mindestquerschnitt hat, weist einen Ringsteg (97) auf, der einen kleineren Bohrungsquerschnitt hat, als die vor und hinter dem Ringsteg (97) gelegenen Bohrungsbereiche, vgl. Figur 3.

Zwischen der Schnittstellenausnehmung (92) und der Exzenterraumbohrung (95) befindet sich der z.B. zylindrische Stützringsitz (93), der zur Schnittstellenausnehmung (92) hin eine Ringnut zur Aufnahme eines Sicherungsrings (149) aufweist.

Das Aufnahmeteil (81) hat im hinteren Bereich eine oder mehrere Quer- oder Schrägbohrungen, die den Gehäuseinnenraum (26) zur Führung eines werkzeugseitig ausbringbaren Kühl- und/oder Schmiermittels mit der Werkzeugausnehmung (91) verbindet.

Nach den Figuren 3 und 5 sitzt in der Werkzeugausnehmung (91) des Aufnahmeteils (81) der mittels der Exzenterwelle (151) längsverschiebbare Spannbolzen (121). Der Spannbolzen (121), vgl. auch Figur 6, ist als zentrales Teil der Segmentspannzange (120) z.B. ein Drehteil mit einem Führungsabschnitt (123), einem Taillenabschnitt (131) und einem Spreizabschnitt (133). Das hintere Teil des Spannbolzens (121), der Führungsabschnitt (123), sitzt mit geringem Spiel in der zylindrischen Exzenterraumbohrung (95).

Der Führungsabschnitt (123) hat eine zentrale querliegende Exzenterausnehmung (124), vgl. Figur 5, die von der Exzenterwelle (151) durchdrungen wird. Die Exzenterausnehmung (124) hat im Wesentlichen einen rechteckigen Querschnitt. Die Querschnittsecken sind ausgerundet. Die längeren, geraden Kanten des Rechteckquerschnittes werden nach Figur 5 von der Spindelmittellinie (15) geschnitten.

Zwischen der hinteren, unter 45 Winkelgraden breit angefasten Stirnseite des Spannbolzens (121) und der Exzenterausnehmung (124) befindet sich nach Figur 5 beispielsweise eine langlochartige den Führungsabschnitt (123) durchquerende Ausnehmung (126), die parallel zur Exzenterausnehmung (124) orientiert ist. Zwischen der Exzenterausnehmung (124) und der Ausnehmung (126) bleibt ein Federsteg (127) stehen, dessen Wandstärke je nach Federrate z.B. zwischen 0,5 bis 1,5 mm beträgt.

Das vordere Ende des Spannbolzens (121), der Spreizabschnitt (133), hat die Form eines kurzen gestuften Zylinders, der mittels eines Kegelstumpfes (134) in den benachbarten Taillenabschnitt (131) übergeht. Der Kegelstumpf (134) hat einen Spitzenwinkel von z.B. 110 Winkelgraden, wobei die gedachte Spitze des Kegelstumpfes (134) auf der Spannbolzenmittellinie im Bereich des Taillenabschnittes (131) liegt. Der Taillendurchmesser ist kleiner als der maximale Durchmesser des Spreizabschnittes (133). Der Taillenabschnitt (131), an dem z.B. sechs Zangensegmente (141) der Segmentspannzange (120) anliegen, geht mittels einer gestuften Stirnfläche in den im Durchmesser größeren Führungsabschnitt (123) über.

Im Bereich der Abschnitte (133, 131) befinden sich z.B. eine zentrale Längsbohrung (135) und zwei Schrägbohrungen (136) zur internen Kühl- und/oder Schmiermittelführung, vgl. Figuren 2 und 5.

Die Zangensegmente (141) sind jeweils Wiegestücke, deren zur Mittellinie (15) hin orientierte Oberfläche zwei Anlagebereiche hat, die jeweils für sich der Außenkontur des Taillenabschnitts (131) angepasst sind, vgl. Figuren 5 und 6. Im Längsschnitt sind die Zangensegmente (141) kleine Kniehebel, die einen Knickwinkel von z.B. 169 Winkelgraden aufweisen. Nach Figur 5 liegt der kurze hintere Hebelarm - bei offener Segmentspannzange (120) - am Taillenabschnitt (131) an, während der vordere längere Hebelarm, der in einem radial nach außen abstehenden Klemmsteg (142) endet, entsprechend dem Knickwinkel absteht. In der Zone des Knickwinkels steht radial ein Radialsteg (143) ab, hinter dem - im Bereich des hinteren Hebelarms - eine eine Ringfeder (145) aufnehmende Kerbe (144) mit Halbrundquerschnitt liegt.

Bei montierter Segmentspannzange (120) werden die Zangensegmente (141) im Bereich der Radialstege (143) und der Ringfeder (145) von einem geteilten Stützring (147) umgeben. Der Stützring (147) hat eine innere Ringnut (148), in die einzelne Radialstege (143) hineinragen. Er ist in der Werkzeugausnehmung (91) im Stützringsitz (93) durch einen Sicherungsring (149) axial fixiert und dort mittels eines in einer äußeren Ringnut angeordneten Dichtrings abgedichtet.

In Figur 7 ist die Exzenterwelle (151) separat mit ihren beiden Dichtringen (177, 178) dargestellt. Die Exzenterwelle (151) weist drei Abschnitte auf. Der erste Abschnitt, er liegt nach Figur 7 vorn, ist der Betätigungsabschnitt (152). Er hat eine zylindrische Außenkontur mit einer Ringnut zur Aufnahme des Dichtrings (177). Seine freie Stirnfläche ist z.B. eine sphärisch, konvex gewölbte Fläche (154), deren Krümmungsradius z.B. der halben Länge der Exzenterwelle (151) entspricht. Sie weist eine beispielsweise 6 mm tiefe, querliegende Betätigungsnut (155) mit rechteckigem Querschnitt auf. Die Tiefe der Betätigungsnut (155) entspricht der halben Betätigungsnutbreite.

An anderen Ende der Exzenterwelle (151) befindet sich der zylindrische Festlagerabschnitt (171), der eine Ringnut zur Aufnahme eines Dichtrings (178) trägt. Seine freie Stirnfläche (172) trägt eine zentrale Gewindebohrung (173), über die mittels einer Senkschraube (176) eine Positionierscheibe (174) an der Exzenterwelle (151) angeschraubt ist. Die Positionierscheibe (174) ist eine einfach gestufte Scheibe mit zentraler Senkbohrung und einem planen Bund (175) an der Scheibenstufe. Im montierten Zustand, vgl. Figuren 3 und 4, wird der Ringsteg (97) der Querbohrung (96) der Spindel (80) zwischen dem Bund (175) und der Stirnfläche (172) mit geringem Spiel axial fixiert.

Der Exzenterabschnitt (161), dessen Länge geringfügig größer ist als die Tiefe der Exzenterausnehmung (124) des Spannbolzens (121), hat z.B. drei aktive Exzenterzentren (163, 165, 167) mit unterschiedlichen Exzentrizitäten und Krümmungen (164, 166, 168). Der Querschnitt (157) des Exzenterabschnitts (161) ist im Bezug zum Querschnitt der Exzenterausnehmung (124) in den Figuren 8 bis 11 in verschiedenen Schwenkpositionen dargestellt.

Figur 8 zeigt die Exzenterausnehmung (124) des ungespannten Spannbolzens (121) mit der geschnittenen Exzenterwelle (151). Die Exzenterwelle (151) kontaktiert mit ihrer ersten Exzenterkrümmung (164) die linke Wandung der Exzenterausnehmung (125). Diese Exzenterkrümmung (164) hat einen Radius von z.B. 7,6 mm bei einer Exzentrizität von ca. 12 mm. Der Winkelbereich dieser Exzenterkrümmung (164) misst ca. 31 Winkelgrade.

Die Figur 9 zeigt die um ca. 29 Winkelgrade in Gegenuhrzeigerrichtung weitergeschwenkte Exzenterwelle (151) bei einem um ca. 0,93 mm in Spannrichtung verschobenen Spannbolzen (121). Hier liegt die Übergangsstelle zwischen der ersten Exzenterkrümmung (164) und der zweiten Exzenterkrümmung (166) an der linken Wandung (125) der Exzenterausnehmung (124) an. Die zweite Exzenterkrümmung (166) hat einen Radius von z.B. 2 mm bei einer Exzentrizität von ca. 4,9 mm. Der Winkelbereich dieser Exzenterkrümmung (166) misst ca. 45 Winkelgrade.

In Figur 10 ist die um ca. 45 Winkelgrade weitergeschwenkte Exzenterwelle (151) dargestellt. Zwischenzeitlich ist der Spannbolzen (121) z.B. um weitere 1,6 mm nach rechts verschoben worden. Nach dieser Figur 10 liegt die Übergangsstelle zwischen der zweiten Exzenterkrümmung (166) und der dritten Exzenterkrümmung (168) an der linken Wandung (125) der Exzenterausnehmung (124) an. Diese dritte wirksame Exzenterkrümmung (168) hat einen Radius von z.B. 7,3 mm bei einer Exzentrizität von ca. 0,53 mm. Der Winkelbereich dieser Exzenterkrümmung (168) misst ca. 104 Winkelgrade.

Figur 11 zeigt die Endlage der Exzenterwelle (151) bei maximal möglichem Hub des Spannbolzens (121) in Klemmrichtung. Der Spannbolzen (121) wurde dazu z.B. um weitere 0,9 mm verschoben. Der gesamte Schwenkwinkel der Exzenterwelle (151) beträgt z.B. ca. 175 Winkelgrade.

Da die Exzenterwelle (151) als unregelmäßiges Gleichdick in jeder Winkelstellung mit wenig Spiel zwischen die beiden einander gegenüberliegenden - zur Mittellinie normalen - Wandungen passt, hat sie noch einige weitere Exzenterkrümmungen, die jedoch nicht für das Spannen die Wandung (125) erreichen.

Die Oberfläche des Exzenterabschnitts (161) ist ggf. oberflächenvergütet. Beispielsweise ist dort als verschleißfeste PVD-Beschichtung z.B. eine Titan- oder Chromnitridschicht aufgetragen.

Durch die Nähe der Exzenterwelle (151) zur vorderen Stirnfläche (82) der Spindel (80), die die plane Anlagefläche des zu spannenden Werkzeugs darstellt, ist u.a. eine kurze Baulänge des Werkzeugaggregats möglich. Der Abstand (5) der Schwenkachse (75) der Exzenterwelle (151) zur freien Stirnfläche (82) der Spindel (80) ist - in Millimetern gemessen - so zu wählen, dass er kleiner oder gleich einer Summe aus zwei bestimmten Summanden ist. Der eine Summand ist die Zahl "8". Der andere Summand ist ein Produkt, das sich aus den Faktoren "0,9" und dem nutzbaren Stirnflächendurchmesser "d₁" - in Millimetern angegeben - der ISO/DIS 26623-2 des jeweiligen Schnittstellen-Abmessungstyps zusammensetzt.

Für die Schnittstellen-Abmessungstypen "C3", "C4" und "C5" haben der Reihe nach die Stirnflächendurchmesser "d₁" die Werte 32 mm, 40 mm und 50 mm, während die dazugehörigen Abstände (5) z.B. 36,5 mm, 43 mm und 53 mm messen.

Die in Figur 7 dargestellte Exzenterwelle (151) kann im Bezug zu ihrer Schwenkachse (75) so konstruiert sein, dass sie keine Unwucht aufweist. Alternativ kann die Exzenterwelle (151) eine solche Form haben, dass ihr Massenschwerpunkt - im eingebauten Zustand - sowohl in der Nähe der Schwenkachse (75) als auch in der Nähe der Mittellinie (15) bzw. in der Mitte der Längsausdehnung der Exzenterwelle (151) liegt. Hierbei zählen die Positionierscheibe (174) und die Senkschraube (176) zur Exzenterwelle (151).

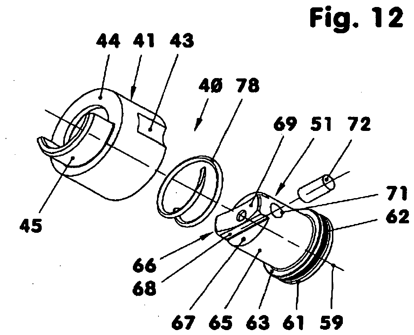

Die Betätigungsbaugruppe (40) besteht aus einem im Gehäuse (10) in der Querbohrung (23) angeordneten Halteelement (41) und einem in diesem gelagerten, federbelasteten Betätigungselement (51), vgl. Figur 12. Das Halteelement (41) ist im Wesentlichen ein topfförmiger Körper mit zentral aufgebohrtem Boden (44). An seiner zylindrischen Außenfläche weist es - zur Fixierung des Halteelements (41) im Gehäuse (10) - zwei einander gegenüberliegende teilzylindrische Einsenkungen (43) auf, vgl. auch Figuren 2 und 4.

An der Unterseite des Bodens (44) ist am Halteelement (41) eine Anschlagschürze (45) angeformt. Letztere ist Teil eines z.B. 7,53 mm langen rohrförmigen Abschnittes, dessen Querschnitt ein Kreisringausschnitt von beispielsweise 205 Winkelgraden fehlt. Bei der Montage in das Gehäuse (10) legt sich der Boden (44) an dem inneren Bund der einfach gestuften Querbohrung (23) an, vgl. Figur 4. Zwei Zylinderkopfschrauben (48), deren Köpfe bereichsweise in die Einsenkungen (43) hineinragen, halten dort das Halteelement (41) kraft- und formschlüssig.

Die Fixierung des Halteelements (41) in axialer Richtung und/oder in Umfangsrichtung im Gehäuse (10) kann auch durch andere Normteile erfolgen, z.B. durch längs- und/oder quer eingesetzte Stifte.

Das Betätigungselement (51), vgl. Figur 12, ist ein einfachgestufter, z.B. aus dem Vergütungsstahl 42CrMo4 gefertigter und vergüteter Bolzen, der in einem vorderen Dichtbereich (61), in dem er eine Ringnut zur Aufnahme eines Dichtrings (62) aufweist, einen größeren Durchmesser hat. Der längere, hintere, ebenfalls zylindrische Führungsbereich (65) hat bereichsweise eine rückseitige, ebene Stirnfläche (67), die als Stirnstruktur (66) einen lappenartigen Betätigungssteg (68) trägt. Dieser Betätigungssteg (68) hat zwei parallele Flanken und passt mit geringem Spiel bezüglich seines Flankenabstandes in die Betätigungsnut (155) der Exzenterwelle (151). Die freie Stegstirnfläche (69) des Betätigungssteges (68) ist mit einer konkav gekrümmten, sphärischen Fläche (69) versehen, deren Symmetrieachse die Mittellinie (75) des Betätigungselements (51) ist. Die Krümmung der sphärischen Fläche (69) entspricht beispielsweise der Krümmung der freien Stirnfläche (154) der Exzenterwelle (151).

Der Führungsbereich (65) hat in der Nähe des Betätigungssteges (68) eine radial orientierte Querbohrung (71), in der ein zylindrischer Anschlagstift (72) bereichsweise eingepresst ist, vgl. Figur 4. Die Mittellinie des Anschlagstiftes (72) verläuft parallel zu den Flanken des Betätigungssteges (68).

Zwischen dem zwischen dem Dichtbereich (61) und dem Führungsbereich (65) gelegenen Bund (63) und dem Boden (44) des Halteelements (41) ist eine Schraubendruckfeder (78) angeordnet, vgl. auch Figur 4. Sie drückt das im Halteelement (41) gelagerte Betätigungselement (51) nach außen. Wenn hierbei der Anschlagstift (72) am Boden (44) des Halteelements (41) anliegt, schließt die äußere Stirnfläche (53) des Betätigungselements (51) zumindest nahezu bündig mit der vorderen Stirnfläche (42) des Halteelements (41) ab.

Innerhalb des Halteelements (41) ist das Betätigungselement (51) um die Mittellinie (75) bereichsweise schwenkbar und gegen die Federkraft der Schraubendruckfeder (78) längsverschiebbar gelagert.

Am hinteren Ende der Spindel (80) sitzt auf der Kerbverzahnung (112) der Kupplungswelle (111) zur Bildung einer Positionierkupplung (180) längsverschiebbar ein Kupplungsring (181). Dieser Kupplungsring (181) ist ein rohrförmiger Körper, der im hinteren Bereich eine radial nach außen abstehende Rastnase (182) aufweist, vgl. Figur 3. Die Rastnase (182) hat z.B. zwei seitliche Flanken, die einen Winkel von z.B. 50 Winkelgraden einschließen. Der Kupplungsring (181) stützt sich über eine Schraubendruckfeder (183) am Bundsteg (113) der Kupplungswelle (111) ab. Wie in Figur 3 gezeigt, wird die Rastnase (182) über ihre Flanken, vgl. DE 42 28 946 C2, in der rückseitigen Stirnnut (34) des Gehäuses (10) eingekeilt. Wird das Werkzeugaggregat an der Werkzeugmaschine adaptiert, wird der Kupplungsring (181) soweit in die Stufenbohrung (14) eingeschoben, dass die Rastnase (182) nicht mehr in die Stirnnut (34) hineinragt. Die Positionierkupplung (180) ist nun ausgekuppelt.

Wird der Werkzeugadapter von der Werkzeugmaschine getrennt, wenn die Rastnase (182) der Positionierkupplung (180) vor der Stirnnut (34) positioniert ist, liegt der Betätigungssteg (68) des Betätigungselements (51) direkt oder fast direkt vor der Betätigungsnut (155) der Exzenterwelle (151).

In der Regel befindet sich der Werkzeugadapter vor der Adaption an die Werkzeugmaschine in einem Zustand, in dem die Exzenterwelle (151) der Segmentspannzange (120) mit dem Betätigungselement (51) fluchtet. Hierfür sorgt die ggf. vorhandene Kupplung (180).

Beim Fluchten der Exzenterwelle (151) mit dem Betätigungselement (51) wird vorausgesetzt, dass die Mittellinie (59) des Betätigungselements (51) zumindest annähernd in einer zur Mittellinie (15) normal gelegenen Ebene (29) liegt. Um hier eine gewisse Toleranz zuzulassen, wird angenommen, dass die Punkte, die durch den Schnitt der Mittellinie (59) mit den beiden Stirnflächen (53, 69) des Betätigungselementes (51) entstehen, in einem Raum liegen, der durch zwei, z.B. 2 mm auseinander entfernt liegenden parallelen Ebenen begrenzt ist, wobei die Ebene (29) eine zu diesen Ebenen orientierte Mittelebene ist. Die Ebenen sind dabei parallel zu der Mittelebene (29).

Vor dem Einsetzen des Werkzeugs in die Werkzeugaufnahme (91) befindet sich die Exzenterwelle (151) und das Betätigungselement (51) in der in den Figuren 2 bis 5 gezeigten Position, die u.a. durch die letzte Werkzeugentnahme vorgegeben ist. Hier ist die Segmentspannzange (120) also geöffnet. Die Markierung (55) des Betätigungselements (51) fluchtet mit der Markierung (47) des Halteelements (41), vgl. Figur 2.

Nach dem Einsetzen des Werkzeugaggregats in die Werkzeugmaschine und nach dem Aufnehmen des Werkzeugs in der Schnittstellenausnehmung (92) wird in den Innensechskant (54) des Betätigungselements (51) ein Sechskantwerkzeug gesteckt. Mit dem Sechskantwerkzeug wird das Betätigungselement (51) ca. 4 mm in radialer Richtung in das Gehäuse (10) hineingeschoben. Hierbei gelangt der Betätigungssteg (68) - unter Herstellung eines formschlüssigen Sitzes - in die Betätigungsnut (155) der Exzenterwelle (151).

Anstelle der für das Erzeugen des beschriebenen formschlüssigen Kontaktes verwendeten Teile (68, 155) können auch Strukturen benutzt werden die z.B. auf einem kreuzförmigen Steg, auf einer Kreuzschlitzkontur, auf einem Sechs- oder Mehrkant, auf einer Polygonform, auf einer Torxstruktur, auf einer Hirth-, Kerb- oder Keilverzahnung basieren. Auch andere kuppelbare Formen oder Kombinationen hiervon sind denkbar. Eine vergleichbare Eingriffsformenvielfalt gilt auch für den Eingriff des Sechskantwerkzeuges in den Innensechskant (54).

Nach dem Eingriff des Betätigungsstegs (68) in die Betätigungsnut (155) werden das Betätigungselement (51) und die Exzenterwelle (151) gemäß der Darstellung in Figur 2 im Uhrzeigerdrehsinn, also in einer Rechtsdrehung, geschwenkt. Der Exzenterabschnitt (161) der Exzenterwelle (151) wird unter einer Gleitbewegung direkt gegen die Wandung (125) der Exzenterausnehmung (124) gepresst, vgl. Figuren 8 bis 11. Nacheinander kommen die verschiedenen Exzenterkrümmungen (164, 166, 168) in Eingriff. Hierbei wird der Spannbolzen (121) der Segmentspannzange (120) - bei konstanter Winkelgeschwindigkeit der Exzenterwelle (151) - zunächst langsam, dann beschleunigt und abschließend wieder relativ langsam verschoben.

Bei dieser Bewegung des Spannbolzens (121) greifen die Klemmstege (142) der Zangensegmente (141) zunächst in eine Innenringnut des Werkzeuges ein, um dann mittels des Spreizabschnitts (133) dort verklemmt zu werden. In der letzten Bewegungsphase wird das Werkzeug mit großer Kraft in die Schnittstellenausnehmung (92) gezogen. Die Werkzeugklemmung ist beendet, wenn das Werkzeug fest an der Stirnfläche (82) der Spindel (80) anliegt. Nun ist die Markierung (56) des Betätigungselements vor der Markierung (47) des Halteelements (41) angelängt.

Im Übrigen ist der Schwenkwinkel des Betätigungselements (51) durch den Anschlagstift (72) und die am Halteelement (41) angeformte Anschlagschürze (45) beschränkt.

Das im Innensechskant (54) steckende Sechskantwerkzeug kann herausgezogen werden. Die Rückholfeder (78) drückt das Betätigungselement (51) wieder nach außen, sodass der Betätigungssteg (68) aus der Betätigungsnut (155) herausgezogen wird. Zwischen den Teilen (68) und (155) liegt nun ein maximaler Abstand von 0,5 mm. Der Werkzeugspannvorgang ist beendet.

Nun hat das Betätigungselement (51) - z.B. beim Verdrehen der Exzenterwelle (151) mittels eines genau vorgegebenen Drehmoments - genau die Winkelposition eingenommen, die auch die Exzenterwelle (151) einnimmt. Diese Position des Betätigungselements (51) kann z.B. durch ein strammes Sitzen des Dichtrings (62) - auch beim Betrieb des Werkzeuges - gehalten werden.

Alternativ kann die Position des Betätigungselements (51) gegenüber dem Halteelement (41) auch durch einen Formschluss in nahe beieinander liegenden Rastpositionen gesichert werden. Dazu hat z.B. der Boden (44) des Halteelements (41) mehrere nebeneinander liegende Kerben. Der Anschlagbolzen (72) rastet dann in die jeweils nächstgelegene Kerbe - zumindest bereichsweise - formschlüssig ein. Hier können auch andere axial wirksame Kuppelkonturen, wie z.B. eine Stirnverzahnung oder dergleichen verwendet werden.

Es ist auch möglich, die Exzenterwelle (151) zwischen zwei exakt festgelegten Positionen zwischen Lösen und Klemmen zu bewegen. In diesem Fall wird zur Sicherstellung einer in einem bestimmten Toleranzfeld gelegenen Klemmkraft in der Segmentspannzange (120) eine definierbare Elastizität eingebaut. Nach Figur 5 wird dazu z.B. im Spannbolzen (121) eine Ausnehmung (126) unterhalb der Wandung (125) der Exzenterausnehmung (124) eingearbeitet. Zwischen den Ausnehmungen (124, 126) befindet sich somit ein durchgehender elastischer Steg (127), der beim Verschwenken der Exzenterwelle (151) auf Zug und Biegung beansprucht wird. Durch die Wandstärke oder Breite des Federstegs (127) sowie durch eine entsprechende Formanpassung der Ausnehmung (126) ist die Federrate gezielt festlegbar. Ggf. kann der Steg (127) auch ganz oder bereichsweise geschlitzt sein.

Anstelle dieses integrierten Federelements (127) kann der Spannbolzen (121) im hinteren Bereich verlängert werden, um dort eine konventionelle, nachgiebige Exzenteranlage zu schaffen. Letztere kann aus einer mittels eines üblichen Federelements, z.B. einer Tellerfeder oder einem Tellerfederstapel, gefederten Abstützplatte bestehen. Auch andere gleichwirkende Lösungen sind denkbar.

In jedem Fall kann hier das Betätigungselement (51) in beiden Endpositionen - bezüglich seiner beiden Schwenkpositionen - formschlüssig am Halteelement (41) anliegen.

Sollte beim Einwechseln des Werkzeugaggregats das Betätigungselement (51) und die Spindel (80) nicht in der vorgesehenen Position verharren, kann die Einkuppelposition, also die fluchtende Lage der Teile (51, 151), durch ein Drehen der Spindel (80) bei radial belastetem Betätigungselement (51) ertastet werden. Da die Stirnstruktur (153) über die zylindrische Wandung (87) der Spindel (80) geringfügig übersteht, ist die gesuchte Position problemlos zu erfassen.

Dies ist besonders einfach, wenn die Kontur der Positionierscheibe (174), einschließlich der Senkschraube (176), hinter bzw. innerhalb der zylindrischen Wandung (87) der Spindel (80) zumindest geringfügig zurückbleibt. Da die Stirnstruktur (153) zum einen einen größeren Durchmesser hat als der Querschnitt des Festlagerabschnitts (171) und zum anderen konkav gewölbt ist, kann sie im Bereich des Festlagerabschnitts (171) nicht in die Spindel (80) eintauchen.

Befindet sich das Betätigungselement (51) ungefähr vor dem Betätigungsabschnitt (152), spurt der Betätigungssteg (68) bei belastetem Betätigungselement (51) schon bei der ersten halben Umdrehung ein, da sich das Betätigungselement (51) aufgrund seiner konkaven Stegstirnfläche (69) an der konvexen Stirnfläche (154) des Betätigungsabschnitts (152) zentriert.

Die Segmentspannzange (120) kann bei dem vorliegenden Werkzeugaggregat ausgetauscht werden, ohne dass dazu die Spindel (80) aus dem Gehäuse (10) montiert werden muss. Für diesen Vorgang wird zunächst die komplette Betätigungsbaugruppe (40) durch Entfernen der Schrauben (48), vgl. Figur 4, ausgebaut. In einem weiteren Schritt wird die Spindel (80) um 180 Winkelgrade um ihre Mittellinie (15) geschwenkt, so dass der Festlagerabschnitt (171) der Exzenterwelle (151) vor der Querbohrung (23) positioniert ist. Nun kann die Positionierscheibe (174) von der Exzenterwelle (151) gelöst und mit der Senkschraube (176) aus dem Gehäuse (10) entnommen werden. In einem weiteren Schritt wird die Spindel (80) um 180 Winkelgrade zurückgeschwenkt, damit der Betätigungsabschnitt (152) vor die Querbohrung (23) gelangt. Auf dem Grund der Betätigungsnut (155) befindet sich ein z.B. zentrales Auszugsgewinde (156), in das eine längere Schraube eingeschraubt wird, um mit deren Hilfe die Exzenterwelle (151) aus Exzenterausnehmung (124) und durch die Querbohrung (23) hindurch aus dem Gehäuse (10) zu nehmen. Dazu ist der dortige Durchmesser der Querbohrung (23) größer als der maximale Außendurchmesser der Exzenterwelle (151).

Nun wird der zwischen der Schnittstellenausnehmung (92) und dem Stützringsitz (93) in der Werkzeugausnehmung (91) angeordnete Sicherungsring (149) entfernt. Abschließend kann der Spannbolzen (121) zusammen mit dem Stützring (148) und den Zangensegmenten (141) nach vorn aus der Spindel (80) herausgenommen werden.

### Bezugszeichenliste:

- 5: Abstand

- 10: Gehäuse des Werkzeugaggregats
- 11: Gehäusevorderteil
- 12: Bedienungsseite
- 13: Stirnseite, rückwärtig, groß
- 14: Stufenbohrung
- 15: Mittellinie
- 16: Abschnitt, vorn
- 17: Schulterkugellager, vorn, Wälzlager
- 18: Gehäusebund
- 19: Gehäusesteg, nach innen ragend

- 21: Nadellager, hinten, Wälzlager
- 22: Innenringnut
- 23: Querbohrung des Gehäuses, gestuft
- 24: Mittellinie
- 25: Gewindebohrung mit zylindrischer Senkung
- 26: Gehäuseinneres
- 27: Gehäuselängsbohrung
- 29: Ebene

- 31: Gehäuseaufnahme, hinten; VDI-Zylinderschaft nach DIN 69880
- 32: Stirnseite, rückwärtig, klein
- 33: Abflachung
- 34: Stirnnut, Rechtecknut, rückseitig
- 35: Gehäusedeckel
- 36: Lippendichtung
- 37: Labyrinthdichtung

- 38: Winkelanschluss, externe Kühlmittelführung
- 39: Schwenkkugeladapter

- 40: Betätigungsbaugruppe
- 41: Halteelement
- 42: Stirnfläche, vorn
- 43: Einsenkungen
- 44: Boden
- 45: Anschlagschürze
- 47: Markierungsstrich
- 48: Senkschrauben, Zylinderkopfschrauben

- 51: Betätigungselement
- 52: Stirnstruktur, außen
- 53: Stirnfläche, außen
- 54: Innensechskant
- 55: Markierungsstrich
- 56: Markierungssektor
- 59: Mittellinie

- 61: Dichtbereich, vorn
- 62: Dichtring
- 63: Bund

- 65: Führungsbereich
- 66: Stirnstruktur, innen
- 67: Stirnfläche, eben, rückwärtig
- 68: Betätigungssteg
- 69: Stegstirnfläche, Fläche, sphärisch konkav gekrümmt
- 71: Querbohrung, klein
- 72: Anschlagstift
- 75: Mittellinie, Schwenkachse
- 78: Rückholfeder, Schraubendruckfeder
- 80: Spindel
- 81: Aufnahmeteil, vorn
- 82: Stirnfläche, vorn
- 83: Lagerabschnitt
- 84: Außengewinde
- 85: Wellenbund, vorn
- 86: Bund, hinten
- 87: Wandung, zylindrisch

- 91: Werkzeugaufnahme; Werkzeugausnehmung, Schnittstelle für polygonale Hohlschaftkegel, z.B. Capto-Schnittstelle
- 92: Schnittstellenausnehmung, polygonaler Hohlkegel, Bereich von (91)
- 93: Stützringsitz, Bereich von (91)
- 95: Exzenterraumbohrung, Bereich von (91)
- 96: Querbohrung der Spindel
- 97: Ringsteg
- 99: Lappen
- 101: Wellenmutter
- 102: Umgriff

- 111: Kupplungswelle, hinten
- 112: Kerbverzahnung
- 113: Bundsteg
- 114: Nut
- 116: Schraube, Zylinderkopfschraube
- 117: Montagefuge

- 120: Segmentspannzange
- 121: Spannbolzen
- 123: Führungsabschnitt
- 124: Exzenterausnehmung
- 125: Wandung zur spannenden Anlage von (161)
- 126: Ausnehmung, Federausnehmung
- 127: Federsteg, Federelement
- 128: Mittellinie

- 131: Taillenabschnitt, Taille
- 133: Spreizabschnitt
- 134: Kegelstumpf
- 135: Längsbohrung
- 136: Schrägbohrungen

- 141: Zangensegmente
- 142: Klemmsteg
- 143: Radialsteg
- 144: Kerbe
- 145: Ringfeder

- 147: Stützring, zweiteilig
- 148: Ringnut, innere
- 149: Sicherungsring

- 150: Exzenterspannvorrichtung
- 151: Exzenterwelle
- 152: Betätigungsabschnitt, 1. Abschnitt; Betätigungsadapter
- 153: Stirnstruktur
- 154: Stirnfläche, sphärisch, konvex gewölbt
- 155: Betätigungsnut
- 156: Auszugsgewinde
- 157: Querschnitt von (161)
- 161: Exzenterabschnitt, 2. Abschnitt
- 163: Exzenterzentrum, erstes
- 164: Exzenterkrümmung, erste
- 165: Exzenterzentrum, zweites
- 166: Exzenterkrümmung, zweite
- 167: Exzenterzentrum, drittes
- 168: Exzenterkrümmung, dritte

- 171: Festlagerabschnitt, 3. Abschnitt
- 172: Stirnfläche, frei
- 173: Gewindebohrung
- 174: Positionierscheibe
- 175: Bund
- 176: Senkschraube
- 177, 178: Dichtringe

- 180: Kupplung, längsverschiebbar, drehstarr, Positionierkupplung
- 181: Kupplungsring
- 182: Rastnase
- 183: Kupplungsfeder, Schraubendruckfeder

## Patentansprüche

1. Werkzeugaggregat mit mindestens einer in einem Gehäuse (10) angeordneten antreibbaren Spindel (80), wobei die Spindel (80) eine Werkzeugaufnahme (91) mit einer integrierten Exzenterspannvorrichtung (150) aufweist und wobei die Exzenterspannvorrichtung (150) eine Exzenterwelle (151) hat, die an mindestens einem Ende einen Betätigungsadapter (152) trägt,
- wobei im Gehäuse (10) eine Betätigungsbaugruppe (40) mit mindestens einem Halteelement (41), mindestens einem Betätigungselement (51) und mindestens einer Rückholfeder (78) angeordnet ist,
- wobei das Betätigungselement (51) im Gehäuse (10) und/oder im Halteelement (41) schwenk- und längsverschiebbar gelagert ist,
- wobei die Schwenkachse (75) der Exzenterwelle (151) zumindest annähernd in einer Ebene (29) liegt, in der auch die Mittellinie (59) des Betätigungselements (51) liegt,
- wobei das Betätigungselement (51) eine im Gehäuseinneren (26) gelegene Stirnstruktur (66) hat, die - bei stehender Spindel (80) - zum Ankuppeln an den Betätigungsadapter (152) geeignet ist, **dadurch gekennzeichnet,**
- **dass** sich am anderen Ende der Exzenterwelle (151) ein zylindrischer Festlagerabschnitt (171) befindet, dessen freie Stirnfläche (172) eine zentrale Gewindebohrung (173) trägt, über die mittels einer Senkschraube (176) eine Positionierscheibe (174) an der Exzenterwelle (151) angeschraubt ist,
- **dass** die Positionierscheibe (174) eine einfach gestufte Scheibe mit zentraler Senkbohrung und einem planen Bund (175) an der Scheibenstufe ist und
- **dass** im montierten Zustand ein Ringsteg (97) einer Querbohrung (96) der Spindel (80) zwischen dem Bund (175) und der Stirnfläche (172) mit geringem Spiel axial fixiert ist.

2. Werkzeugaggregat gemäß Anspruch 1, **dadurch gekennzeichnet, dass** die Mittellinie (59) des Betätigungselements (51) senkrecht zur Mittellinie (15) der Spindel (80) - diese schneidend - angeordnet ist.

3. Werkzeugaggregat gemäß Anspruch 1, **dadurch gekennzeichnet, dass** die innere Stirnstruktur (66) des Betätigungselements (51) eine Gestaltung hat, die zumindest bereichsweise formschlüssig zur Stirnstruktur (153) des Betätigungsadapters (152) passt.

4. Werkzeugaggregat gemäß Anspruch 1, **dadurch gekennzeichnet, dass** die Spindel (80) oder eine der Spindel (80) nachgeschaltete Welle eine längsverschiebbare, drehstarre Kupplung (180) zum blockierenden Ankuppeln der Spindel (80) oder der Welle an das Gehäuse (10) aufweist, wobei die Kupplung (180) durch das Adaptieren des Werkzeugaggregats an die es tragende Maschine auskuppelbar ist.

5. Werkzeugaggregat gemäß Anspruch 1, **dadurch gekennzeichnet, dass** die Werkzeugaufnahme (91) eine sogenannte Capto-Schnittstelle nach den Normentwürfen ISO/DIS 26623-1 und ISO/DIS 26623-2 ist.

6. Werkzeugaggregat gemäß Anspruch 1, **dadurch gekennzeichnet, dass** die Schwenkachse (75) der Exzenterwelle (151) zur freien Stirnfläche (82) der Spindel (80) einen Abstand (5) in Millimetern hat, der aus einer Summe von zwei Summanden besteht, wobei der eine Summand die Zahl "8" und der andere Summand ein Produkt ist, das sich aus den Faktoren "0,9" und dem nutzbaren Stirnflächendurchmesser "d₁" - in Millimetern - der ISO/DIS 26623-2 des jeweiligen Schnittstellen-Abmessungstyps zusammensetzt.

7. Werkzeugaggregat gemäß Anspruch 1, **dadurch gekennzeichnet, dass** der Festlagerabschnitt (171) eine Ringnut zur Aufnahme eines Dichtrings (178) trägt.

8. Werkzeugaggregat gemäß Anspruch 7, **dadurch gekennzeichnet,**
- **dass** das Halteelement (41) in einer gestuften, in eine zentrale Stufenbohrung (14) mündende Querbohrung (23) im Gehäuses (10) angeordnet ist und durch Normteile in axialer Richtung und/oder in Umfangsrichtung im Gehäuse (10) fixiert ist,
- **dass** der Festlagerabschnitt (171) durch Schwenken der Spindel (80) um 180 Winkelgrad um ihre Mittellinie (15) vor die Querbohrung (23) positionierbar ist,
- **dass** die komplette Betätigungsbaugruppe (40) durch Entfernen von Schrauben (48) ausbaubar ist und
- **dass** die Positionierscheibe (174) von der Exzenterwelle (151) lösbar ist und zusammen mit der Senkschraube (176) aus dem Gehäuse (10) entnehmbar ist.

9. Werkzeugaggregat gemäß Anspruch 8, **dadurch gekennzeichnet,**
- **dass** durch Zurückschwenken der Spindel um 180 Winkelgrade der Betätigungsabschnitt (152) vor die Querbohrung (23) positionierbar ist,
- **dass** der dortige Durchmesser der Querbohrung (23) größer als der maximale Außendurchmesser der Exzenterwelle (151) ist und
- **dass** die Exzenterwelle (151) aus einer Exzenterausnehmung (124) eines Führungsabschnitts (123) eines Spannbolzens (121) der Exzenterspannvorrichtung (150) und durch die Querbohrung (23) aus dem Gehäuse (10) entnehmbar ist.

10. Werkzeugaggregat mit mindestens einer in einem Gehäuse (10) angeordneten antreibbaren Spindel (80), wobei die Spindel (80) eine Werkzeugaufnahme (91) mit einer integrierten Exzenterspannvorrichtung (150) aufweist und wobei die Exzenterspannvorrichtung (150) eine Exzenterwelle (151) hat, die an mindestens einem Ende einen Betätigungsadapter (152) trägt,
- wobei im Gehäuse (10) eine Betätigungsbaugruppe (40) mit mindestens einem Halteelement (41), mindestens einem Betätigungselement (51) und mindestens einer Rückholfeder (78) angeordnet ist,
- wobei das Betätigungselement (51) im Gehäuse (10) und/oder im Halteelement (41) schwenk- und längsverschiebbar gelagert ist,
- wobei die Schwenkachse (75) der Exzenterwelle (151) zumindest annähernd in einer Ebene (29) liegt, in der auch die Mittellinie (59) des Betätigungselements (51) liegt,
- wobei das Betätigungselement (51) eine im Gehäuseinneren (26) gelegene Stirnstruktur (66) hat, die - bei stehender Spindel (80) - zum Ankuppeln an den Betätigungsadapter (152) geeignet ist,
- wobei zum Spannen eines Werkzeugs in der Werkzeugaufnahme (91) in der Spindel (80) eine Segmentspannzange (120) angeordnet ist, die mit der Exzenterspannvorrichtung (150) in einer Wirkverbindung steht,
- wobei ein Spannbolzen (121) als zentrales Teil der Segmentspannzange (120) ein Drehteil mit einem Führungsabschnitt (123), einem Taillenabschnitt (131) und einem Spreizabschnitt (133) ist,
- wobei der Führungsabschnitt (123) eine zentrale querliegende Exzenterausnehmung (124) hat, die von der Exzenterwelle (151) durchdrungen wird, **dadurch gekennzeichnet,**
- **dass** im Spannbolzen (121) eine weitere. Ausnehmung (126) unterhalb der Wandung (125) der Exzenterausnehmung (124) eingearbeitet ist und einen durchgehenden elastischen Steg (127) zwischen der Exzenterausnehmung (124) und der weiteren Ausnehmung (126) bildet.

11. Werkzeugaggregat gemäß Anspruch 10, **dadurch gekennzeichnet, dass** der Steg (127) ganz oder bereichsweise geschlitzt ist.

12. Werkzeugaggregat gemäß Anspruch 10, **dadurch gekennzeichnet, dass** sich die weitere Ausnehmung (126) zwischen der hinteren, unter 45 Winkelgraden breit angefasten Stirnseite des Spannbolzens (121) und der Exzenterausnehmung (124) befindet und dass die weitere Ausnehmung (126) eine langlochartige den Führungsabschnitt (123) durchquerende Ausnehmung ist, die parallel zur Exzenterausnehmung (124) orientiert ist.

13. Werkzeugaggregat gemäß Anspruch 10, **dadurch gekennzeichnet, dass** die Wandstärke des Stegs (127) zwischen 0,5 bis 1,5 mm beträgt.

## Claims

1. Tool assembly with at least one driveable spindle (80) arranged in a housing (10), wherein the spindle (80) has a tool holder (91) with an integrated eccentric clamping device (150) and wherein the eccentric clamping device (150) has an eccentric shaft (151) which carries on at least one end an actuating adapter (152),
- wherein an actuating assembly (40) comprising at least one holding element (41), at least one actuating element (51) and at least one return spring (78) is arranged in the housing (10),
- wherein the actuating element (51) is mounted in the housing (10) and/or in the holding element (41) in a swivelable and longitudinally displaceable manner,
- wherein the swivel axis (75) of the eccentric shaft (151) lies at least approximately in a plane (29) in which the centre line (59) of the actuating element (51) also lies,
- wherein the actuating element (51) has an end face structure (66) located in the inside of the housing (26) which - with upright spindle (80) - is suitable for coupling to the actuating adapter (152), **characterised in that**
- a cylindrical fixed bearing section (171) is located at the other end of the eccentric shaft (151), the free end face (172) of which carries a central threaded bore(173) via which a positioning disc (174) is screwed onto the eccentric shaft (151) by means of a countersunk screw (176),
- that the positioning disc (174) is a single-stepped disc with central counterbore and a flat flange (175) on the disc step and
- that in the assembled state an annular collar (97) of a transverse bore (96) of the spindle (80) is axially fixed between the flange (175) and the end face (172) with slight play.

2. Tool assembly according to claim 1, **characterised in that** the centre line (59) of the actuating element (51) is arranged perpendicular to the centre line (15) of the spindle (80), intersecting this.

3. Tool assembly according to claim 1, **characterised in that** the inner end face structure (66) of the actuating element (51) has a form which at least in portions fits in a form-locking manner with the end face structure (153) of the actuating adapter (152).

4. Tool assembly according to claim 1, **characterised in that** the spindle (80) or a shaft installed after the spindle (80) has a longitudinally displaceable, rotationally fixed coupling (180) for coupling the spindle (80) or the shaft to the housing (10) in a blocking manner, wherein the coupling (180) can be uncoupled through the adaptation of the tool assembly to the machine carrying it.

5. Tool assembly according to claim 1, **characterised in that** the tool holder (91) is a so-called Capto interface according to the draft standards ISO/DIS 26623-1 and ISO/DIS 26623-2.

6. Tool assembly according to claim 1, **characterised in that** the swivel axis (75) of the eccentric shaft (151) is spaced at a distance (5) in millimetres from the free end face (82) of the spindle (80) which consists of a sum of two addends, wherein one addend is the number "8" and the other addend is a product which consists of the factors "0.9" and the useable end face diameter "d₁" - in millimetres - according to ISO/DIS 26623-2 for the respective interface dimensions type.

7. Tool assembly according to claim 1, **characterised in that** the fixed bearing section (171) carries an annular groove to receive a seal ring (178).

8. Tool assembly according to claim 7, **characterised in that**
- the holding element (41) is arranged in a stepped transverse bore (23) in the housing (10) opening into a central stepped bore (14) and is fixed in the housing (10) in an axial direction and/or in a circumferential direction by means of standard parts,
- that the fixed bearing section (171) can be positioned in front of the transverse bore (23) by swivelling the spindle (80) by 180 angular degrees around its centre line (15),
- that the complete actuating assembly (40) can be removed by removing screws (48) and
- that the positioning disc (174) is detachable from the eccentric shaft (151) and can be removed from the housing (10) together with the countersunk screw (176).

9. Tool assembly according to claim 8, **characterised in that**
- the actuation section (152) can be positioned in front of the transverse bore (23) by swivelling the spindle back by 180 angular degrees,
- that the diameter of the transverse bore (23) at this point is greater than the maximum outer diameter of the eccentric shaft (151) and
- that the eccentric shaft (151) can be removed from an eccentric recess (124) of a guide section (123) of a clamping bolt (121) of the eccentric clamping device (150) and, through the transverse bore (23), from the housing (10) .

10. Tool assembly with at least one driveable spindle (80) arranged in a housing (10), wherein the spindle (80) has a tool holder (91) with an integrated eccentric clamping device (150) and wherein the eccentric clamping device (150) has an eccentric shaft (151) carrying on at least one end an actuating adapter (152),
- wherein an actuating assembly (40) with at least one holding element (41), at least one actuating element (51) and at least one return spring (78) is arranged in the housing (10),
- wherein the actuating element (51) is mounted in the housing (10) and/or in the holding element (41) in a swivelable and longitudinally displaceable manner,
- wherein the swivel axis (75) of the eccentric shaft (151) lies at least approximately in a plane (29) in which the centre line (59) of the actuating element (51) also lies,
- wherein the actuating element (51) has an end face structure (66) located in the inside of the housing (26) which - with upright spindle (80) - is suitable for coupling to the actuating adapter (152),
- wherein in order to clamp a tool in the tool holder (91) a segment collet chuck (120) is arranged in the spindle (80) which is in operative connection with the eccentric clamping device (150),
- wherein a clamping bolt (121), as central part of the segment collet chuck (120), is a turned part with a guide section (123), a waist section (131) and a spread section (133),
- wherein the guide section (123) has a central transverse eccentric recess (124) which is passed through by the eccentric shaft (151), **characterised in that**
- a further recess (126) is worked into the clamping bolt (121) beneath the wall (125) of the eccentric recess (124) and forms a continuous elastic web (127) between the eccentric recess (124) and the further recess (126).

11. Tool assembly according to claim 10, **characterised in that** the web (127) is slitted throughout or in sections.

12. Tool assembly according to claim 10, **characterised in that** the further recess (126) is located between the rear end face of the clamping bolt (121), chamfered at 45 degrees, and the eccentric recess (124), and that the further recess (126) is a slot-like recess traversing the guide section (123) which is oriented parallel to the eccentric recess (124).

13. Tool assembly according to claim 10, **characterised in that** the wall thickness of the web (127) is between 0.5 and 1.5 mm.

## Revendications

1. Ensemble outil avec au moins une broche (80) disposée dans un carter (10) et pouvant être entraînée, la broche (80) présentant un porte-outils (91) avec un dispositif de serrage à excentrique intégré (150) et dans lequel le dispositif de serrage à excentrique intégré (150) a un arbre à excentrique (151), qui comporte un adaptateur d'actionnement (152) au moins à une extrémité,
- dans lequel un ensemble d'actionnement (40) avec au moins un élément de retenue (41), au moins un élément d'actionnement (51) et au moins un ressort de rappel (78) est disposé dans le carter (10),
- dans lequel l'élément d'actionnement (51) est monté dans le carter (10) et/ou dans l'élément de retenue (41) de manière pivotante et coulissante longitudinalement,
- dans lequel l'axe de pivotement (75) de l'arbre à excentrique (151) est situé au moins approximativement dans un plan (29) dans lequel se trouve également l'axe central (59) de l'élément d'actionnement (51),
- dans lequel l'élément d'actionnement (51) présente une structure frontale (66) située à l'intérieur (26) du carter, qui est appropriée pour être accouplée à l'adaptateur d'actionnement (152) à l'arrêt de la broche (80), **caractérisé en ce**
- **qu'**une section de paramétrage cylindrique (171) se trouve au niveau de l'autre extrémité de l'arbre à excentrique (151), dont une surface frontale libre (172) comporte un alésage fileté (173), via lequel un disque de positionnement (174) est vissé au moyen d'une vis à tête conique (176) au niveau de l'arbre à excentrique (151),
- **que** le disque de positionnement (174) est un disque à étage unique avec un contre-alésage central et un collier plat (175) au niveau de l'étage de disque et
- **que** dans l'état monté, une nervure annulaire (97) d'un alésage transversal (96) de la broche (80) est fixée de manière axiale entre le collier (175) et la surface frontale (172) avec un faible jeu.

2. Ensemble outil selon la revendication 1, **caractérisé en ce que** l'axe central (59) de l'élément d'actionnement (51) est disposé perpendiculairement à l'axe central (15) de la broche (80) - coupant celui-ci.

3. Ensemble outil selon la revendication 1, **caractérisé en ce que** la structure frontale intérieure (66) de l'élément d'actionnement (51) est d'une forme qui correspond au moins partiellement par complémentarité de forme à la structure frontale (153) de l'adaptateur d'actionnement (152).

4. Ensemble outil selon la revendication 1, **caractérisé en ce que** la broche (80) ou un arbre monté en aval de la broche (80) présente un dispositif d'accouplement (180) coulissante longitudinalement et rigide en torsion, destiné à l'accouplement bloquant de la broche (80) ou de l'arbre au carter (10), le dispositif d'accouplement (180) pouvant être débrayé en adaptant l'ensemble outil à la machine qui le porte.

5. Ensemble outil selon la revendication 1, **caractérisé en ce que** le porte-outils (91) est une soi-disant interface de Coromant Capto selon les projets de normes ISO/DIS 26623-1 et ISO/DIS 26623-2.

6. Ensemble outil selon la revendication 1, **caractérisé en ce que** l'axe de pivotement (75) de l'arbre à excentrique (151) se trouve à une distance (5) en millimètres par rapport à la surface frontale libre (82) de la broche (80) qui est la somme des deux opérandes, dans lequel un opérande est le chiffre "8" et l'autre opérande est un produit composé des facteurs "0,9" et du diamètre utile de la surface frontale "d₁", en millimètres, selon ISO/DIS 26623-2 du type correspondant de dimension de l'interface.

7. Ensemble outil selon la revendication 1, **caractérisé en ce que** la section de paramétrage (171) comporte une rainure annulaire pour recevoir une bague d'étanchéité (178).

8. Ensemble outil selon la revendication 7, **caractérisé en ce**
- **que** l'élément de retenue (41) est disposé dans un alésage transversal étagé (23) débouchant dans un alésage étagé central (14) dans le carter (10), et est fixé par des pièces normalisées dans une direction axiale et/ou dans une direction circonférentielle dans le carter (10),
- **que** la section de paramétrage (171) est positionnée devant l'alésage transversal (23) en faisant pivoter la broche (80) sur un angle de 180 degrés autour de son axe central (15),
- **que** l'ensemble d'actionnement complet (40) est amovible en retirant des vis (48) et
- **que** le disque de positionnement (174) de l'arbre à excentrique (151) est détachable et peut être retiré ensemble avec la vis à tête fraisée (176) à partir du carter (10).

9. Ensemble outil selon la revendication 8, **caractérisé en ce**
- **qu'**en pivotant la broche sur 180 degrés vers l'arrière, l'adaptateur d'actionnement (152) peut être positionné devant l'alésage transversal (23),
- **que** le diamètre local de l'alésage transversal (23) est supérieur au diamètre extérieur maximum de l'arbre à excentrique (151) et
- **que** l'arbre à excentrique (151) peut être retiré à partir d'un évidement à excentrique (124) d'une section de guidage (123) d'un boulon de serrage (121) du dispositif de serrage à excentrique intégré (150) et à partir du carter (10) via l'alésage transversal (23).

10. Ensemble outil avec au moins une broche (80) disposée dans un carter (10) et pouvant être entraînée, dans lequel la broche (80) présente un porte-outils (91) avec un dispositif de serrage à excentrique intégré (150), et dans lequel le dispositif de serrage à excentrique intégré (150) a un arbre à excentrique (151), qui comporte un adaptateur d'actionnement (152) au moins à une extrémité,
- dans lequel un ensemble d'actionnement (40) avec au moins un élément de retenue (41), au moins un élément d'actionnement (51) et au moins un ressort de rappel (78) est disposé dans le carter (10),
- dans lequel l'élément d'actionnement (51) est monté dans le carter (10) et/ou dans l'élément de retenue (41) de manière pivotante et coulissante longitudinalement,
- dans lequel l'axe de pivotement (75) de l'arbre à excentrique (151) est situé au moins approximativement dans un plan (29), dans lequel se trouve également l'axe central (59) de l'élément d'actionnement (51)
- dans lequel l'élément d'actionnement (51) a une structure frontale (66) située à l'intérieur (26) du carter, qui est appropriée pour être accouplée à l'adaptateur d'actionnement (152) à l'arrêt de la broche (80),
- dans lequel une pince de serrage de segment (120) est disposée pour serrer un outil dans le porte-outils (91) dans la broche (80), laquelle correspond au dispositif de serrage à excentrique intégré (150) dans une liaison fonctionnelle,
- dans lequel un boulon de serrage (121) en tant que partie centrale de la pince de serrage de segment (120) est une partie rotative avec une section de guidage (123), une section de ceinture (131) et une section d'écartement (133),
- dans lequel la section de guidage (123) a un évidement à excentrique (124) transversal central, qui est pénétré par l'arbre à excentrique (151), **caractérisé en ce**
- **qu'**un évidement supplémentaire (126) est intégré dans le boulon de serrage (121) en dessous de la paroi (125) de l'évidement à excentrique (124) et forme une nervure continue élastique (127) entre l'évidement à excentrique (124) et l'évidement supplémentaire (126).

11. Ensemble outil selon la revendication 10, **caractérisé en ce que** la nervure (127) est fendue complètement ou partiellement.

12. Ensemble outil selon la revendication 10, **caractérisé en ce que** l'évidement supplémentaire (126) se situe entre le côté frontal arrière chanfreiné à 45 degrés du boulon de serrage (121) et l'évidement à excentrique (124) et **en ce que** l'évidement supplémentaire (126) est un évidement traversant oblong de la section de guidage (123) qui est orienté parallèlement à l'évidement à excentrique (124).

13. Ensemble outil selon la revendication 10, **caractérisé en ce que** l'épaisseur de paroi de la nervure (127) est comprise entre 0,5 et 1,5 mm.
